# EUROPEAN PATENT APPLICATION

(11) **EP 4 613 360 A1**
(43) Date of publication of application: **10.09.2025**
(21) Application number: 23926106.8
(22) Date of filing: 21.12.2023
(51) Int. Cl.: B01D 53/78, B01D 53/62, C10L 3/10

(54) **GAS TREATMENT APPARATUS AND GAS TREATMENT METHOD**

(30) Priority: 08.03.2023 CN 202310216131; 08.03.2023 CN 202310216392; 08.03.2023 CN 202310216418
(71) Applicant: China Petroleum & Chemical Corporation, Beijing 100728 (CN); Sinopec Engineering (Group) Co., Ltd., Beijing 100120 (CN)
(72) Inventor: CHEN, Qiang, Luoyang, Henan 471003 (CN); WEI, Jia, Luoyang, Henan 471003 (CN); SHENG, Weiwu, Luoyang, Henan 471003 (CN); LI, Xiaoting, Luoyang, Henan 471003 (CN); CHENG, Yongpan, Luoyang, Henan 471003 (CN); LI, Linge, Luoyang, Henan 471003 (CN)
(74) Representative: karo IP
(86) International application number: PCT/CN2023/140737
(87) International publication number: WO 2024/183412

(57) **Abstract**

The gas treatment apparatus and a gas treatment method. The gas treatment apparatus comprises: a column (13), an upper sealing head (14) connected to an upper end of the column (13), and a lower sealing head (15) connected to a lower end of the column (13), wherein: a fluid inlet pipe (3) is arranged at a position of the column (13) close to the upper scaling head (14), a fluid outlet end of the fluid inlet pipe (3) extending into the column (13), and the fluid outlet end being connected to an absorption fluid spray nozzle (10) used for spraying absorption fluid downwards; a gas inlet pipe (6) is arranged at a position of the column (13) close to the lower scaling head (15), and a gas outlet end of the gas inlet pipe (6) extends into the column (13) and is used for inputting into the column (13) gas to be treated; the gas outlet end of the gas inlet pipe (6) has connected thereto a microbubble-generating inner part (9), the microbubble-generating inner part (9) being used for forming microbubbles in the gas to be treated coming from the gas outlet end, and for mixing the microbubbles into the absorption fluid; a back-mixing inner part (5) is arranged in the column (13) above the microbubble-generating inner part (9), the back-mixing inner part (5) being used for causing the absorption fluid to form a back-mixing vortex under the action of an upward flow of microbubbles.

## Description

### Cross Reference to Related Applications

The present application claims the priority of Chinese Patent Application Nos. 202310216131.2, 202310216392.4 and 202310216418.5 filed on Mar. 8, 2023, the entire contents of which are incorporated here by reference.

### FIELD

The present disclosure belongs to the technical field of gas treatment, and particularly relates to a gas treatment apparatus and a gas treatment method.

### BACKGROUND

As the quality of the raw materials in the petrochemical industry is degraded, most of the storage media contain sulfur-containing compounds, nitrogen-containing compounds and fine particles. In the petrochemical production process, large quantities of toxic and harmful gases are produced inevitably. These toxic and harmful gases are not only harmful to people's health, but also cause serious damages to the ecological environment. It is necessary to treat the toxic and harmful gases produced by means of gas treatment apparatuses to ensure normal operation of the production process.

Most of the existing gas treatment apparatuses are plate tower structures. Such absorption towers are usually very high and have a disadvantage of instability, and they tend to sway in windy weather and involve an unsafe factor; in addition, it is difficult to improve the mass transfer efficiency, and the gas-liquid contact is not sufficient; the entire apparatus has a severe resistance drop and a high energy loss.

### SUMMARY

In view of the shortcomings in the prior art, an object of the present disclosure is to provide a gas treatment apparatus to solve the problems of low mass transfer efficiency and insufficient gas-liquid contact, and greatly reduce the size and cost of the apparatus.

To attain the object described above, the present disclosure employs the following technical scheme:
A gas treatment apparatus, comprising a cylinder, a top sealing head connected to a top end of the cylinder, and a bottom sealing head connected to a bottom end of the cylinder, wherein:
a fluid inlet pipe is arranged at a position of the cylinder close to the top sealing head, a fluid outlet end of the fluid inlet pipe extends into the cylinder, and the fluid outlet end is connected to an absorption fluid sprayer used for spraying absorption fluid downwards;
a gas inlet pipe is arranged at a position of the cylinder close to the bottom sealing head, and a gas outlet end of the gas inlet pipe extends into the cylinder and is used for inputting a gas to be treated into the cylinder;
the gas outlet end of the gas inlet pipe has a microbubble-generating inner part connected thereto, and the microbubble-generating inner part is used for forming microbubbles from the gas to be treated coming from the gas outlet end, and for mixing the microbubbles into the absorption fluid;
a back-mixing inner part is arranged in the cylinder above the microbubble-generating inner part, and the back-mixing inner part is used for causing the absorption fluid to form a back-mixing vortex under the action of an upward flow of the microbubbles.

With the above technical scheme of the present disclosure, a microbubble-generating inner part and a back-mixing inner part are arranged in a cylinder sequentially from bottom to top, and the microbubble-generating inner part and the back-mixing inner part are combined to form an enhanced gas absorption inner part that is enhanced microscopically and macroscopically, wherein microbubbles are generated by means of the microbubble-generating inner part to enhance microscopic gas-liquid contact; then the back-mixing inner part is utilized to mix the gas phase and the liquid phase that are in microscopically enhanced contact to form a macroscopic back-mixing vortex; the inner parts for combined enhancement are combined in aspects of microscopic gas-liquid contact and macroscopic overall gas-liquid flow, and can enhance back-mixing, increase a mass transfer coefficient and increase the retention time in the gas-liquid contact state, thus effectively improve the gas absorption effect. In addition, with the absorption fluid sprayer that sprays the absorption fluid downwards, the gas escaping from the absorption fluid has a secondary reaction with the absorption fluid sprayed downwards in the upward flow process; the gas is a continuous phase, and the liquid is a dispersed phase sprayed into the gas, thus the contact area between the gas and the liquid is large and the mass transfer efficiency is high. Compared with the plate tower structure, the gas treatment apparatus provided by the present disclosure doesn't need a large quantity of tower plates and other components, thus a transformation from the plate absorption tower structure to a novel absorption apparatus is realized, the structure of the apparatus is simplified, the space utilization is improved, the pressure drop in the entire apparatus is reduced, the energy loss is reduced, and the safety of the apparatus is improved while the cost is reduced.

In some embodiments, the microbubble-generating inner part comprises an inner part body and a submerged pump, wherein the inner part body comprises a first variable-diameter mixing cavity, a reduced mounting cavity and a second variable-diameter mixing cavity, which are in communication with each other sequentially from bottom to top; an end of the first variable-diameter mixing cavity away from the reduced mounting cavity forms a liquid phase inlet, the first variable-diameter mixing cavity has a conical cavity therein, and an end of the conical cavity facing the reduced mounting cavity is open; the reduced mounting cavity is filled with a first mixing core; the inner part body further comprises an gas inlet branch pipe, one end of the gas inlet branch pipe is connected to the gas outlet end of the gas inlet pipe, and the other end of the gas inlet branch pipe is in communication with the conical cavity; and an outlet of the submerged pump is in communication with the liquid phase inlet.

In some embodiments, an end of the first variable-diameter mixing cavity connected with the reduced mounting cavity and an end of the second variable-diameter mixing cavity connected with the reduced mounting cavity are small-diameter ends.

In some embodiments, the first variable-diameter mixing cavity comprises a cylindrical section and a conical section, which are in communication with each other from bottom to top, and a maximum diameter of the conical section is equal to the diameter of the cylindrical section; the diameter of the reduced mounting cavity is equal to a minimum diameter of the conical section, the second variable-diameter mixing cavity is configured to gradually expand from bottom to top, and a minimum diameter of the second variable-diameter mixing cavity is equal to the diameter of the reduced mounting cavity.

In some embodiments, the conical cavity comprises a first conical section and a second conical section, which are in communication with each other from bottom to top, and the gas inlet branch pipe is in communication with the first conical section;

In some embodiments, the conicity of the first conical section is greater than the conicity of the second conical section.

In some embodiments, a Venturi mixing inner part is arranged in the cylinder between the microbubble-generating inner part and the back-mixing inner part, and the Venturi mixing inner part is used for further breaking a microbubble stream from the microbubble-generating inner part, accelerating the microbubble stream and then outputting the microbubble stream upwards.

In some embodiments, the Venturi mixing inner part comprises a gas collection port, a cavity structure and a mixing expansion port, which are connected sequentially from bottom to top, wherein the gas collection port is configured to be reduced gradually in diameter from bottom to top; the mixing expansion port is configured to be gradually expanded in diameter from bottom to top; the cavity structure has a reduced section in communication with the bottom of the mixing expansion port and a variable-diameter section in communication with the bottom of the reduced section therein, and the reduced section is filled with a second mixing core.

In some embodiments, the Venturi mixing inner part further comprises a connecting leg, which is connected between the top of the mixing expansion port and the bottom of the back-mixing inner part.

In some embodiments, the back-mixing inner part comprises an inner cylinder and a distribution disc mounted on an inner wall of the inner cylinder, wherein the inner cylinder is coaxially arranged with the cylinder, with clearance between an outer wall of the inner cylinder and the inner wall of the cylinder.

In some embodiments, the inner cylinder is in height of 500-1,500 mm, and the clearance between the outer wall of the inner cylinder and the inner wall of the cylinder is 100-200 mm.

In some embodiments, the back-mixing inner part further comprises a sieve plate mounted on the inner wall of the inner cylinder, and the sieve plate is arranged above the distribution disc in a spaced apart manner.

In some embodiments, the distribution disc is provided with a plurality of axial through-holes, and a tubular distributor is arranged in each axial through-hole.

In some embodiments, the sieve plate is provided with a plurality of bar gratings.

In some embodiments, a gas exhaust pipe is arranged on the upper part of the top sealing head, and a drain pipe is arranged on the lower part of the bottom sealing head.

In some embodiments, a deflection baffle is arranged on the inner wall of the cylinder between the back-mixing inner part and the fluid inlet pipe.

In some embodiments, a defoaming mechanism is further mounted on the inner wall of the cylinder. In some embodiments, the defoaming mechanism comprises an upper defoamer, a middle defoamer and a lower defoamer, wherein the upper defoamer is located above the fluid inlet pipe, the middle defoamer is located between the fluid inlet pipe and the deflection baffle, and the lower defoamer is located below the gas inlet pipe.

In some embodiments, all of the upper defoamer, the middle defoamer and the lower defoamer are wire mesh structures,
the upper defoamer has 1-5 mm mesh aperture, 0.5-2 mm wire diameter, and 50-100 mm thickness;
the middle defoamer has 1-5 mm mesh aperture, 0.5-2 mm wire diameter, and 100-200 mm thickness; and
the lower defoamer has 2-8 mm mesh aperture, 0.5-2 mm wire diameter, and 100-200 mm thickness.

The present disclosure further provides a gas treatment method, which comprises the following steps:
S1: introducing a gas to be treated into an absorption fluid zone in the form of microbubbles for primary reaction;
S2: controlling the absorption fluid in the absorption fluid zone to form a back-mixing vortex under the action of a microbubble stream flowing upwards;
S3: spraying the absorption fluid downwards above the absorption fluid zone, so that the gas escaping from the absorption fluid zone has a secondary reaction with the absorption fluid sprayed downwards in an upward flowing process.

According to the gas treatment method, with the above technical scheme, the gas to be treated is introduced into an absorption fluid zone in the form of microbubbles, the absorption fluid in the absorption fluid zone is a continuous phase, and the gas is a dispersed phase; thus, there is large contact area between the gas and the liquid, the mass transfer efficiency is high, the gas has a primary reaction with the absorption fluid, so that the components to be absorbed in the gas reacts rapidly; by spraying the absorption fluid downwards above the absorption fluid zone, the gas escaping from the absorption fluid has a secondary reaction with the absorption fluid sprayed downwards in the upward flow process; the gas is a continuous phase, and the liquid is a dispersed phase sprayed into the gas, thus the contact area between the gas and the liquid is large and the mass transfer efficiency is high. Therefore, the gas treatment method in the present disclosure improves the space utilization while fully absorbing some components in the gas and improving the mass transfer efficiency.

In some embodiments, the method further comprises: further breaking the microbubble stream and accelerating it before the step S2.

In some embodiments, the method is implemented with the gas treatment apparatus described above.

Other features and advantages of the present disclosure will be further detailed in the following embodiments.

### BRIEF DESCRIPTION OF THE DRAWINGS

The accompanying drawings, which constitute a part of the present disclosure, are provided to facilitate further understanding the present disclosure; the illustrative embodiments and associated description in the present disclosure are intended to explain the present disclosure, and shall not be deemed as constituting any undue limitation to the present disclosure. In the figures:
Fig. 1 is a schematic structural diagram of a first embodiment of the gas treatment apparatus according to the present disclosure;
Fig. 2 is a schematic diagram of the operation flow of the gas treatment apparatus in Fig. 1;
Fig. 3 is a schematic structural diagram of a second embodiment of the gas treatment apparatus according to the present disclosure;
Fig. 4 is a schematic structural diagram of a third embodiment of the gas treatment apparatus according to the present disclosure;
Fig. 5 is a schematic structural diagram of a fourth embodiment of the gas treatment apparatus according to the present disclosure;
Fig. 6 is a schematic structural diagram of an embodiment of the back-mixing inner part according to the present disclosure;
Fig. 7 is a schematic structural diagram of another embodiment of the back-mixing inner part according to the present disclosure;
Fig. 8 is a sectional view A-A of the structure in Fig. 7;
Fig. 9 is a sectional view B-B of the structure in Fig. 7;
Fig. 10 is a schematic structural diagram of an embodiment of the Venturi mixing inner part according to the present disclosure;
Fig. 11 is a cross-sectional view of an embodiment of the microbubble-generating inner part according to the present disclosure;
Fig. 12 is a bottom view of an embodiment of the fluid inlet pipe and the absorption fluid sprayer connected together in the present disclosure; and
Fig. 13 is a side view of the fluid inlet pipe and the absorption fluid sprayer connected together in Fig. 12.

### Reference Numerals

1 - gas exhaust pipe; 2 - upper defoamer; 3 - fluid inlet pipe; 4 - middle defoamer; 5 - back-mixing inner part; 510 - distribution disc; 511 - tubular distributor; 520 - sieve plate; 521 - bar grating; 530 - inner cylinder; 6 - gas inlet pipe; 7 - lower defoamer; 8 - drain pipe; 9 - microbubble-generating inner part; 900 - inner part body; 910 - submerged pump; 920 - first variable-diameter mixing cavity; 930 - gas inlet branch pipe; 940 - first mixing core; 950 - second variable-diameter mixing cavity; 960 - conical cavity; 970 - reduced mounting cavity; 10 - absorption fluid sprayer; 101 - spraying plate; 102 - spraying orifice; 11 - deflection baffle; 12 - Venturi mixing inner part; 121 - gas collection port; 122 - variable-diameter section; 123 - reduced section; 124 - second mixing core; 125 - mixing expansion port; 126 - connecting leg; 13 - cylinder; 14 - top sealing head; 15 - bottom sealing head.

### DETAILED DESCRIPTION

The embodiments of the present disclosure will be further described below in detail with reference to the accompanying drawings. The following detailed description of the embodiments and drawings are used to illustrate the principle of the present disclosure, but are not intended to limit the scope of the present disclosure. The present disclosure can be implemented in many different forms, is not limited to the specific embodiments disclosed herein, but includes all technical schemes falling within the scope of the claims.

These embodiments are provided to make the present disclosure understood thoroughly and completely, and fully convey the scope of the present disclosure to those skilled in the art. It may be noted: unless otherwise specified, the relative arrangement of components and steps, the compositions of materials, numerical expressions and numerical values set forth in these embodiments may be interpreted as merely illustrative rather than limiting.

It may be noted: in the description of the present disclosure, unless otherwise specified, the term "a plurality of" means two or more; the orientational or positional relations indicated by terms "top", "bottom", "left", "right", "inside" and "outside", etc. are used only to ease and simplify the description of the present disclosure, rather than indicating or implying that the involved device or component may have a specific orientation or may be constructed and operated in a specific orientation. Therefore, the use of these terms shall not be deemed as constituting any limitation to the present disclosure. Once the absolute position of the described object is changed, the relative positional relationship may also change accordingly.

In addition, the words "first", "second" and the like used in the present disclosure do not indicate any order, quantity or importance, but are only used to distinguish different parts. "Perpendicular" is not perpendicular in the strict sense, but is within an allowable range of error. "Parallel" is not parallel in the strict sense, but is within an allowable range of error. The word "comprise", "include" or the like mean that the element set forth before the word encompasses the elements set forth after the word, and does not exclude the possibility of encompassing other elements.

In addition, it may be noted: in the description of the present disclosure, unless otherwise specified and defined explicitly, the terms "install", "interconnect", and "connect", etc. shall be interpreted in their general meanings, for example, a connection may be a fixed connection, detachable connection, or integral connection; or may be a direct connection or indirect connection via an intermediate medium. Those having ordinary skills in the prior art may comprehend the specific meanings of the terms in the present disclosure in their contexts. When it is mentioned that a specific component is located between a first component and a second component, an intermediate device may or may not exist between the specific device and the first device or the second device. All terms used in the present disclosure have the same meanings generally understood by those having ordinary skill in the art to which the present disclosure belongs, unless otherwise defined. It may also be understood that the terms defined in, for example, general dictionaries may be interpreted as having meanings consistent with their meanings in the contexts of related arts, and may not be interpreted in an idealistic or extremely formal sense, unless explicitly defined herein. Techniques, methods and apparatuses existing to those having ordinary skills in the art may not be discussed herein in detail, but, where appropriate, those techniques, methods and apparatuses shall be considered as a part of the specification.

It may be noted that the gas treatment apparatus provided in the present disclosure is used to purify the gas to be treated (e.g., sulfur tail gas, recycle gas, natural gas, carbon dioxide, etc.) and absorb harmful substances therein. During use, the absorption fluid introduced into the cylinder is determined according to the specific gas to be treated.

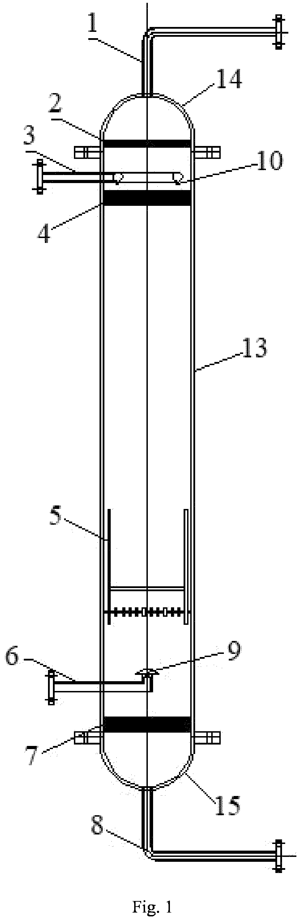

Fig. 1 shows a schematic structural diagram of a first embodiment of the gas treatment apparatus according to the present disclosure. As shown in Fig. 1, the gas treatment apparatus comprises a cylinder 13, a top sealing head 14 connected to a top end of the cylinder 13, and a bottom sealing head 15 connected to a bottom end of the cylinder 13, wherein a gas exhaust pipe 1 is arranged on an upper part of the top sealing head 14, and a drain pipe 8 is arranged on a lower part of the bottom sealing head 15; a fluid inlet pipe 3 is arranged at a position of the cylinder 13 close to the top sealing head 14, a fluid outlet end of the fluid inlet pipe 3 extends into the cylinder 13, and the fluid outlet end of the fluid inlet pipe 3 is connected to an absorption fluid spray nozzle 10 used for spraying absorption fluid downwards; a gas inlet pipe 6 is arranged at a position of the cylinder 13 close to the bottom sealing head 15, and a gas outlet end of the gas inlet pipe 6 extends into the cylinder 13 and is used for inputting a gas to be treated into the cylinder 13; the gas outlet end of the gas inlet pipe 6 has a microbubble-generating inner part 9 connected thereto, and the microbubble-generating inner part 9 is used for forming microbubbles from the gas to be treated coming from the gas outlet end, and for mixing the microbubbles into the absorption fluid; a back-mixing inner part 5 is arranged in the cylinder 13 above the microbubble-generating inner part 9, and the back-mixing inner part 5 is used for causing the absorption fluid to form a back-mixing vortex under the action of an upward flow of the microbubbles.

With the above technical scheme of the present disclosure, a microbubble-generating inner part 9 and a back-mixing inner part 5 are arranged in a cylinder 13 sequentially from bottom to top, and the microbubble-generating inner part 9 and the back-mixing inner part 5 are combined to form an enhanced gas absorption inner part that is enhanced microscopically and macroscopically, wherein microbubbles are generated by means of the microbubble-generating inner part 9 to enhance microscopic gas-liquid contact; then the back-mixing inner part 5 is utilized to mix the gas phase and the liquid phase that are in microscopically enhanced contact to form a macroscopic back-mixing vortex; the inner parts for combined enhancement are combined in aspects of microscopic gas-liquid contact and macroscopic overall gas-liquid flow, and can enhance back-mixing, increase a mass transfer coefficient and increase the retention time in the gas-liquid contact state, thus effectively improve the gas absorption effect. Compared with the plate tower structure, the gas treatment apparatus provided by the present disclosure doesn't need a large quantity of tower plates and other components, thus a transformation from the plate absorption tower structure to a novel absorption apparatus is realized, the structure of the apparatus is simplified, the space utilization is improved, the pressure drop in the entire apparatus is reduced, the energy loss is reduced, and the safety of the apparatus is improved while the cost is reduced.

In addition, the absorption fluid is sprayed downwards by the absorption fluid sprayer 10; in the gas-liquid contact at the upper part of the apparatus, the gas phase is a continuous phase, and the liquid phase is a dispersed phase sprayed into the gas to be treated; in the gas-liquid contact at the lower part of the apparatus, the liquid phase is a continuous phase, and the gas phase is a dispersed phase; thus, not only the mass transfer efficiency is improved, but also the space of the apparatus is reasonably utilized.

In the gas treatment apparatus shown in Fig. 1, the gas treatment apparatus further comprises a defoaming mechanism mounted on the inner wall of the cylinder 13. Specifically, the defoaming mechanism comprises an upper defoamer 2, a middle defoamer 4 and a lower defoamer 7, wherein the upper defoamer 2 is located above the fluid inlet pipe 3, the middle defoamer 4 is located below the fluid inlet pipe 3, and the lower defoamer 7 is located below the gas inlet pipe 6.

Preferably, a distance between the lowermost end of the top sealing head 14 and the fluid inlet pipe 3 is 150-300 mm, such as 200mm, so that the defoamer can be arranged within this distance and there is enough distance to eliminate foam entrainment. A distance between the lowermost end of the back-mixing inner part 5 and a bubble outlet at the top end of the microbubble-generating inner part 9 is 200-800 mm, such as 500mm; thus, the gas phase forms stable microbubbles before entering the back-mixing inner part 5, and the microbubble stream has a certain initial kinetic energy and flow speed when entering the back-mixing inner part 5. It can be understood that the cylinder 13 is provided with a gas inlet (not labeled in the figure) and a liquid inlet (not labeled in the figure). The liquid inlet is located near the top sealing head 14 and at 150-300 mm below the top sealing head 14. The fluid inlet pipe 3 extends to the inner center of the cylinder through the liquid inlet in a direction perpendicular to the cylinder. The gas inlet pipe 6 extends to the inner center of the cylinder through the gas inlet in a direction perpendicular to the cylinder. In some embodiments, in order to facilitate the mounting of the microbubble-generating inner part 9, the gas outlet end of the gas inlet pipe 6 may be bent upward by 90 degrees at the inner center of the cylinder (see Figs. 1, 3 and 5).

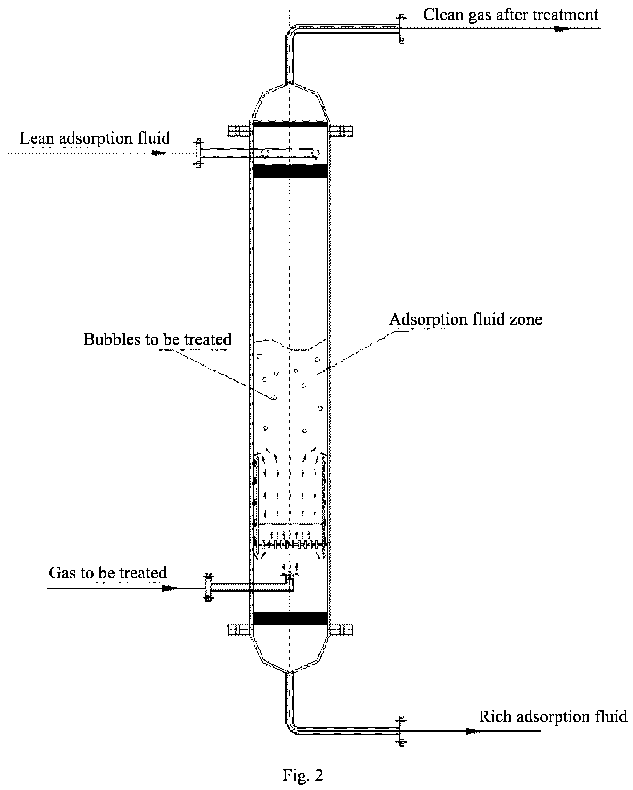

As shown in the schematic flowchart of operation of the gas treatment apparatus in Fig. 2, a reaction chamber for gas absorption is enclosed between the cylinder 13, the top sealing head 14 and the bottom sealing head 15, and there is an absorption fluid zone in the reaction chamber. The microbubble-generating inner part 9 and the back-mixing inner part 5 are located in the absorption fluid zone, and the absorption fluid sprayer 10 is located above the absorption fluid zone. The gas exhaust pipe 1 connected to the top of the top sealing head 14 is used for discharging clean gas formed through gas absorption treatment, and the drain pipe 8 connected to the bottom of the bottom sealing head 15 is used for draining the rich absorption fluid after absorption.

The operating process of the above gas treatment apparatus will be described below in detail with reference to Figs. 1 and 2:
S1: the absorption fluid sprayer 10 is actuated to introduce a certain amount of absorption fluid into the cylinder 13, and the absorption fluid accumulates into a certain liquid layer in the cylinder 13 to form an absorption fluid zone; the liquid level in the absorption fluid zone is higher than the level of the back-mixing inner part 5, specifically, the liquid level is between 200 mm above the back-mixing inner part 5 and the middle defoamer 4;
S2: the valve of the gas inlet pipe 6 is opened, thus the gas to be treated enters the cylinder 13 through the gas inlet pipe 6 and the microbubble-generating inner part 9, and forms microbubbles in the absorption fluid zone at the lower part of the cylinder 13 via the microbubble-generating inner part 9; the gas phase and the liquid phase contact with each other and have a primary reaction for gas absorption treatment, and the gas bubbles to be treated move upwards owing to buoyancy; then the gas phase moves upwards in the absorption fluid and passes through the back-mixing inner part 5 to form a back-mixing vortex, which prolongs the time of mass transfer between the gas phase and the liquid phase; then the gas phase flows upwards;
S3: after the microbubbles escape from the absorption fluid zone, they form a continuous gas phase and move to the upper part of the cylinder 13; at that point, the absorption fluid sprayed by the absorption fluid sprayer 10 is sprayed downwards in the continuous gas phase and contacts with the continuous gas phase in countercurrent, so that the components to be treated in the gas have a secondary reaction and are absorbed;
S4: the clean gas formed after the secondary reaction passes through the upper defoamer 2 and is exhausted from the gas exhaust pipe 1 at the top, and enters the subsequent process; the absorption fluid is drained from the drain pipe 7 at the bottom of the apparatus.

The gas treatment apparatus described above can prolong the retention time of the gas phase and the liquid phase through back-mixing, so that the gas phase and the liquid phase fully contact with each other, while the bed stability is maintained; thus, the mass transfer efficiency is improved, and the size and cost of the apparatus are greatly reduced.

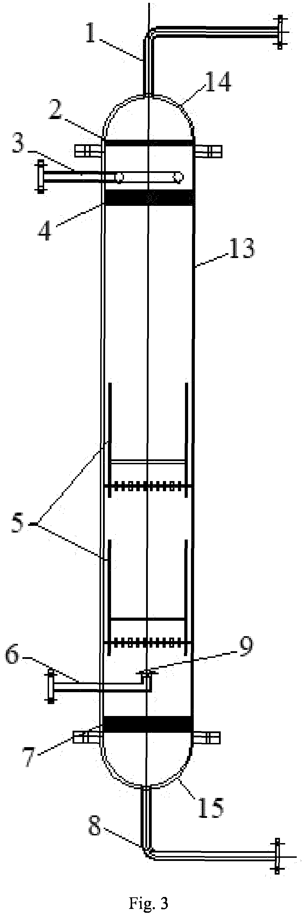

Fig. 3 shows the structural schematic diagram of a second embodiment of the gas treatment apparatus according to the present disclosure. The gas treatment apparatus in this embodiment is similar to the gas treatment apparatus in the first embodiment, except that the gas treatment apparatus includes a plurality of back-mixing inner parts 5, which are arranged at an interval in the height direction of the cylinder 13, so as to perform multi-stage back-mixing turbulence on the flow of the gas phase and liquid phase in the absorption fluid zone. The plurality of back-mixing inner parts 5 are arranged in the absorption fluid zone; specifically, 1-4 back-mixing inner parts may be provided, for example, 1, 2, 3 or 4 back-mixing inner parts may be provided. Specifically, two back-mixing inner parts 5 are shown in Fig. 3. In the actual application, the number of back-mixing inner parts 5 may be selected according to the height of the cylinder 13.

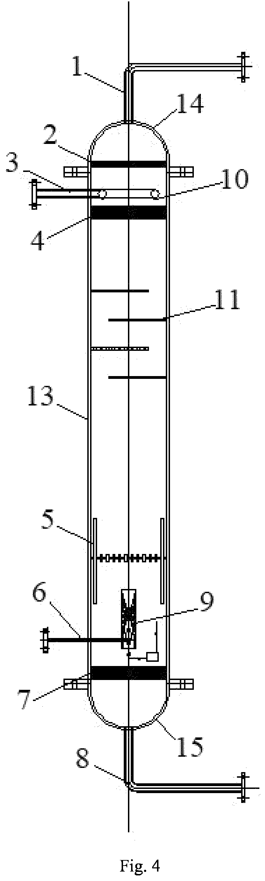

Fig. 4 shows a structural schematic diagram of a third embodiment of the gas treatment apparatus according to the present disclosure. The gas treatment apparatus in this embodiment is similar to the gas treatment apparatus in the first embodiment, except that the gas treatment apparatus further includes a deflection baffle 11, which is arranged on the inner wall of the cylinder between the back-mixing inner part 5 and the fluid inlet pipe 3. Specifically, the gas treatment apparatus shown in Fig. 4 includes a plurality of deflection baffles 11 extending radially inwards from the inner wall of the cylinder 13, and the plurality of deflection baffles 11 are arranged at an interval in the height direction of the cylinder 13, and form a serpentine passage for the gas phase and the liquid phase to flow through and transfer mass between them through contact.

The operating process of the above gas treatment apparatus will be described below in detail with reference to Figs. 4:
S1: the absorption fluid sprayer 10 is actuated to introduce a certain amount of absorption fluid into the cylinder 13, and the absorption fluid accumulates into a certain liquid layer in the cylinder 13 to form an absorption fluid zone; the liquid level in the absorption fluid zone is higher than the level of the back-mixing inner part 5, specifically, the liquid level is between 200 mm above the back-mixing inner part 5 and the middle defoamer 4;
S2: the valve of the gas inlet pipe 6 is opened, thus the gas to be treated enters the cylinder 13 through the gas inlet pipe 6 and the microbubble-generating inner part 9, and forms microbubbles in the absorption fluid zone at the lower part of the cylinder via the microbubble-generating inner part 9; the gas phase and the liquid phase contact with each other and have a primary reaction for gas absorption treatment, and the gas bubbles to be treated move upwards owing to buoyancy; then the gas phase moves upwards in the absorption fluid and passes through the back-mixing inner part 5 to form a back-mixing vortex, which prolongs the time of mass transfer between the gas phase and the liquid phase; then the gas phase flows upwards;
S3: after the microbubbles escape from the absorption fluid zone, they form a continuous gas phase and move to the upper part of the cylinder; at that point, the absorption fluid sprayed by the absorption fluid sprayer 10 is sprayed downwards in the continuous gas phase and contacts with the continuous gas phase in countercurrent, so that the components to be treated in the gas have a secondary reaction and are absorbed;
S4: the clean gas formed after the secondary reaction passes through the upper defoamer 2 and is exhausted from the gas exhaust pipe 1 at the top, and enters the subsequent process; the absorption fluid is drained from the drain pipe 7 at the bottom of the apparatus.

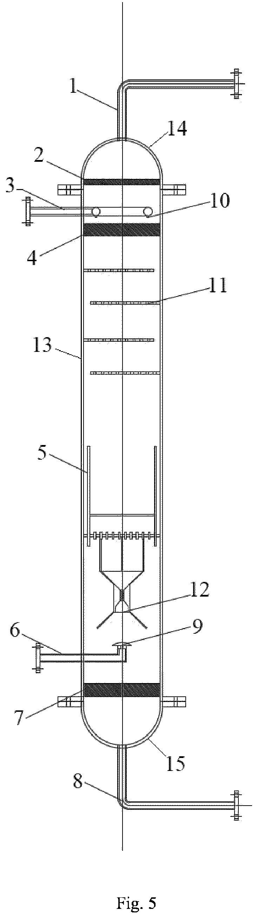

Fig. 5 shows a schematic structural diagram of a fourth embodiment of the gas treatment apparatus according to the present disclosure. The gas treatment apparatus in this embodiment is similar to the gas treatment apparatus in the third embodiment, except the following difference: a Venturi mixing inner part 12 is arranged in the cylinder between the microbubble-generating inner part 9 and the back-mixing inner part 5, and the Venturi mixing inner part 12 is used for further breaking a microbubble stream from the microbubble-generating inner part 9, accelerating the microbubble stream and then outputting the microbubble stream upwards.

In the above embodiment, a microbubble-generating inner part 9, a Venturi mixing inner part 12, and a back-mixing inner part 5 are arranged in a cylinder 13 sequentially from bottom to top, and the microbubble-generating inner part 9, the Venturi mixing inner part 12 and the back-mixing inner part 5 are combined to form an enhanced gas absorption inner part that is enhanced microscopically and macroscopically, wherein microbubbles are generated by means of the microbubble-generating inner part 9 to enhance microscopic gas-liquid contact; at the same time, the Venturi mixing inner part 12 is utilized to further break the microbubbles to improve gas-liquid contact and form a high-speed microbubble stream to enhance back-mixing; finally, the back-mixing inner part 5 is utilized to mix the gas phase and the liquid phase into a macroscopic back-mixing vortex after microscopically enhanced contact; the inner parts for combined enhancement are combined in aspects of microscopic gas-liquid contact and macroscopic overall gas-liquid flow, and can enhance back-mixing, increase a mass transfer coefficient, make the mass transfer more sufficient, increase the degree of turbulence, and increase the retention time in the gas-liquid contact state, thus effectively improve the gas absorption effect.

Preferably, a distance between the lowermost end of the top sealing head 14 and the fluid inlet pipe 3 is 150-300 mm, such as 250mm, so that the defoamer can be arranged within this distance and there is enough distance to eliminate foam entrainment. A distance between the lowermost end of the Venturi mixing inner part 12 and the bubble outlet at the top end of the microbubble-generating inner part 9 is 100-500 mm, such as 350mm, so as to collect all the gas flowing out of the bubble outlet at the top end of the microbubble-generating inner part 9.

The operating process of the above gas treatment apparatus will be described below in detail with reference to Figs. 5:
S1: the absorption fluid sprayer 10 is actuated to introduce a certain amount of absorption fluid into the cylinder 13, and the absorption fluid accumulates into a certain liquid layer in the cylinder 13 to form an absorption fluid zone; the liquid level in the absorption fluid zone is higher than the level of the back-mixing inner part 5, specifically, the liquid level is between 200 mm above the back-mixing inner part 5 and the middle defoamer 4;
S2: the valve of the gas inlet pipe 6 is opened, thus the gas to be treated enters the cylinder through the gas inlet pipe 6 and the microbubble-generating inner part 9; the gas to be treated forms microbubbles through the microbubble-generating inner part 9, and the microbubbles are mixed into the absorption fluid, and the gas phase and the liquid phase transfer mass between them in a microscopic contact state; then the microbubbles are further broken into smaller and more microbubbles through the Venturi mixing inner part 12, and a microbubble stream is formed in the absorption fluid zone at the lower part of the apparatus, and the gas phase and the liquid phase contact with each other for gas absorption treatment; next, the microbubble stream moves upwards in the absorption fluid and passes through the back-mixing inner part 5 and forms a back-mixing vortex, thus the time of mass transfer between the gas phase and the liquid phase is increased; then, the gas phase flows upward;
S3: after the microbubbles escape from the absorption fluid zone, they form a continuous gas phase and move to the upper part of the cylinder; at that point, the absorption fluid sprayed by the absorption fluid sprayer 10 is sprayed downwards in the continuous gas phase and contacts with the continuous gas phase in countercurrent, so that the components to be treated in the gas have a secondary reaction and are absorbed;
S4: the clean gas formed after the secondary reaction passes through the upper defoamer 2 and is exhausted from the gas exhaust pipe 1 at the top, and enters the subsequent process; the absorption fluid is drained from the drain pipe 7 at the bottom of the apparatus.

Compared with the plate tower structure, the gas treatment apparatus provided by the present disclosure doesn't need a large quantity of tower plates and other components, thus a transformation from the plate absorption tower structure to a novel absorption apparatus is realized, the structure of the apparatus is simplified, the space utilization is improved, the pressure drop in the entire apparatus is reduced, the energy loss is reduced, and the safety of the apparatus is improved while the cost is reduced.

Apparently, the gas treatment apparatus provided by the present disclosure has the following characteristics:
According to the present disclosure, two different forms of mass transfer process between the gas phase and the liquid phase are used; in the absorption fluid zone at the lower part of the apparatus, the components to be absorbed in the gas are at the highest concentration, the gas to be absorbed exists in the form of a large quantity of bubbles in the absorption fluid, the absorption fluid is a continuous phase, the gas is a dispersed phase, the contact area between the gas and the liquid is large, the mass transfer efficiency is high, and the gas has a primary reaction with the absorption fluid, so that the components to be absorbed in the gas react rapidly. One or more sets of back-mixing inner parts are arranged in the absorption fluid zone, so that back-mixing flow occurs in the absorption fluid zone, thus the retention time for mass transfer is increased, and the degree of turbulence is increased. At the upper part of the apparatus, absorption fluid droplets are sprayed by the absorption fluid sprayer 10 to further absorb the continuous gas phase, and, at that point, the components to be treated have a secondary reaction.

Besides, the gas entering the apparatus contains a high concentration of components to be treated, and the absorption fluid in the absorption fluid zone is used for reaction and absorption. After the gas escapes from the absorption fluid zone, the concentration of the components to be treated has been decreased, and absorption fluid droplets are utilized for reaction and absorption. Therefore, in the present disclosure, some components in the gas are fully absorbed, the mass transfer efficiency is improved; moreover, the space of the apparatus is reasonably utilized. Compared with the plate tower structure in the prior art, the reactor in the present disclosure has a simplified structure, doesn't required a tower structure, and improves the retention time during operation.

In addition, in the present disclosure, one or more back-mixing inner parts are arranged in the absorption fluid zone, and one or more back-mixing flows are formed in the absorption fluid zone by using the gas driving force from bottom to top, so that the gas-liquid contact time is increased, the degree of turbulence is increased, the mass transfer coefficient is improved, and the mass transfer is more extensive; at the same time, the stability of the bed is maintained, the controllability of the reaction is ensured, and a small pressure drop is maintained.

In the present disclosure, the microbubble-generating inner part 9, the Venturi mixing inner part 12, the back-mixing inner part 5, the absorption fluid sprayer 10 and the defoaming mechanism mentioned in the above embodiments of the gas treatment apparatus may have any suitable structures, as long as their functions can be realized. However, some preferred embodiments of these components are provided in the present disclosure.

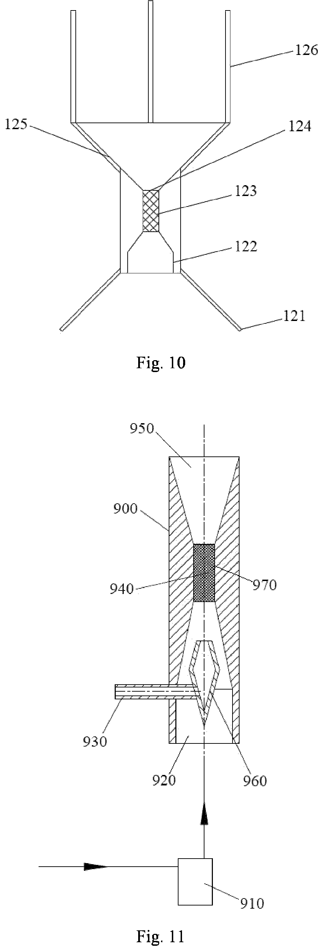

In the embodiment of the microbubble-generating inner part 9 shown in Fig. 11, the microbubble-generating inner part 9 may comprise an inner part body 900 and a submerged pump 910, wherein the inner part body 900 comprises a first variable-diameter mixing cavity 920, a reduced mounting cavity 970 and a second variable-diameter mixing cavity 950, which are in communication with each other sequentially from bottom to top; an end of the first variable-diameter mixing cavity 920 away from the reduced mounting cavity 970 forms a liquid phase inlet, the first variable-diameter mixing cavity 920 has a conical cavity 960 therein, and an end of the conical cavity 960 facing the reduced mounting cavity 970 is open; the reduced mounting cavity 970 is filled with a first mixing core 940; the inner part body 900 further comprises an gas inlet branch pipe 930, one end of the gas inlet branch pipe 930 is connected to the gas outlet end of the gas inlet pipe 6, and the other end of the gas inlet branch pipe 930 is in communication with the conical cavity 960; and an outlet of the submerged pump 910 is in communication with the liquid phase inlet. The microbubble-generating inner part 9 is connected and fixed through a gas phase pipeline and a liquid phase pipeline, thus the microbubble-generating inner part 9 is mounted stably. By arranging the conical cavity 960 in the first variable-diameter mixing cavity 920, the conical cavity 960 and the first variable-diameter mixing cavity 920 can form a reduced flow channel, thereby the flow resistance of the liquid phase entering the first variable-diameter mixing cavity 920 is reduced, the fluid flow area of the liquid phase is changed, thus the flow rate is increased, and the gas in the first variable-diameter mixing cavity 920 is cut and broken preliminarily, thereby microbubble generation effect is effectively improved.

Both the first variable-diameter mixing cavity 920 and the second variable-diameter mixing cavity 950 are variable-diameter structures, and the end of the first variable-diameter mixing cavity 920 connected with the reduced mounting cavity 970 and the end of the second variable-diameter mixing chambers 950 connected with the reduced mounting cavity 970 are small-diameter ends, which is to say, an overall structure having reduced diameters and expanded diameters in the gas and liquid flow direction is formed. The submerged pump 910 may be arranged at the bottom of the apparatus.

Specifically, as shown in Fig. 11, the first variable-diameter mixing cavity 920 comprises a cylindrical section and a conical section, which are in communication with each other from bottom to top, and a maximum diameter of the conical section is equal to the diameter of the cylindrical section; the diameter of the reduced mounting cavity 970 is equal to a minimum diameter of the conical section, the second variable-diameter mixing cavity 950 is configured to gradually expand from bottom to top, and a minimum diameter of the second variable-diameter mixing cavity 950 is equal to the diameter of the reduced mounting cavity 970. The conical cavity 960 comprises a first conical section and a second conical section, which are in communication with each other from bottom to top, and the gas inlet branch pipe 930 is in communication with the first conical section. Preferably, the conicity of the first conical section is greater than the conicity of the second conical section.

In the above embodiment, a first mixing core 940 is arranged at the thinnest part of the microbubble-generating inner part 9, and a submerged pump 910 is connected. The submerged pump is arranged inside the apparatus near the bottom, the absorption fluid in the cylinder is injected by the pump into the liquid phase inlet of the first variable-diameter mixing cavity 920 of the microbubble-generating inner part 9, and the gas phase from the gas inlet pipe 6 is introduced into the conical cavity 960 inside the first variable-diameter mixing cavity 920 through the gas inlet branch pipe 930. The gas phase and the liquid phase collide with each other and are mixed at the open end of the conical cavity 960. At that point, the bubbles are relatively large; the bubbles are broken into smaller microbubbles after passing through the first mixing core 940, and leave the microbubble-generating inner part 9 through the gas-liquid mixing outlet of the second variable-diameter mixing cavity 950.

In other preferred embodiments, the microbubble-generating inner part 9 is made of a porous material, and may be in different shapes such as a tubular shape, a hemispherical shape, or a disc shape, etc., according to the specific requirements, and preferably in a spherical or hemispherical shape, so as to increase the surface area and enable the gas to diffuse to the periphery more uniformly. The connection between the microbubble-generating inner part 9 and the gas inlet pipe 6 may be in the form of bolt connection or flange connection, etc. The microbubble-generating inner part 9 may be made of 316 stainless steel. After the gas to be treated passes through the microbubble-generating inner part 9, large quantities of bubbles are formed in the absorption fluid. Alternatively, the microbubble-generating inner part 9 may employ the microbubble generator for an enhanced hydrogenation process disclosed in Chinese Patent No. 201410081189.1.

Please see the embodiment of the Venturi mixing inner part 12 shown in Fig. 10. The Venturi mixing inner part 12 comprises a gas collection port 121, a cavity structure and a mixing expansion port 125, which are connected sequentially from bottom to top, wherein the gas collection port 121 is configured to be gradually reduced in diameter from bottom to top (i.e., a flared shape); the mixing expansion port 125 is configured to be gradually expanded in diameter from bottom to top (i.e., in the gas flow direction); a reduced section 123 in communication with the bottom of the mixing expansion port 125 and a variable-diameter section 122 in communication with the bottom of the reduced section 123 (reduced from bottom to top in the gas flow direction) are arranged in the cavity structure, and a second mixing core 124 is filled in the reduced section 123. The Venturi mixing inner part is simple, compact and durable, and it improves the degree of turbulence of the gas phase and the liquid phase in the apparatus, thereby improves the mass transfer coefficient and the mass transfer efficiency. By arranging a second mixing core 124 at the thinnest part of the Venturi mixing inner part 12, the gas phase can enter the gas collection port 121 under the action of air floatation, and enter the variable-diameter section 122 through the gas collection port 121, and passes through the second mixing core 124 in the reduced section 123 so that the bubbles are compressed and broken. After passing through the second mixing core 124, the bubbles are further broken and dispersed through the mixing expansion port 125 owing to a pressure change, and then leave the Venturi mixing inner part.

The Venturi mixing inner part 12 may further include a connecting leg 126, which is connected between the top of the mixing expansion port 125 and the bottom of the back-mixing inner part 5. That is to say, the Venturi mixing inner part 12 is connected to the back-mixing inner part 5 through the connecting legs 126. Preferably, at least three connecting legs 126 are provided; specifically, three, four, five, six or more connecting legs 126 may be provided.

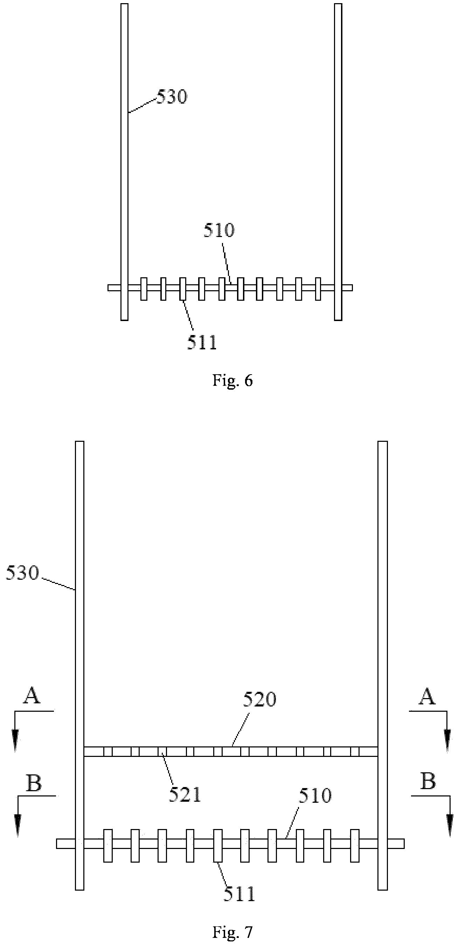

Please see the embodiment of the back-mixing inner part 5 shown in Fig. 6. The back-mixing inner part 5 is a cylindrical structure, and comprises an inner cylinder 530 and a distribution disc 510 mounted on the inner wall of the inner cylinder 530, wherein the inner cylinder 530 is arranged coaxially with the cylinder 13, with clearance between the outer wall of the inner cylinder 530 and the inner wall of the cylinder 13.

In order to ensure that a back-mixing flow can be formed in the back-mixing inner part 5, preferably, the inner cylinder 530 is in height of 500-1,500 mm, more preferably 500 mm, 600 mm, 700 mm, 800 mm, 900 mm, 1,000 mm, 1,100 mm, 1,200 mm, 1,300 mm, 1,400 mm, or 1,500 mm, etc. The clearance between the outer wall of the inner cylinder 530 and the inner wall of the cylinder 13 is preferably 100-200 mm, more preferably 100 mm, 110 mm, 120 mm, 130 mm, 140 mm, 150 mm, 160 mm, 170 mm, 180 mm, 190 mm, or 200 mm, etc.

Please see the embodiment of the back-mixing inner part 5 shown in Fig. 7. The back-mixing inner part 5 includes an inner cylinder 530, and a distribution disc 510 and a sieve plate 520 mounted on the inner wall of the inner cylinder 530, wherein the sieve plate 520 is arranged above the distribution disc 510 in parallel to the distribution disc 510 in a spaced apart manner.

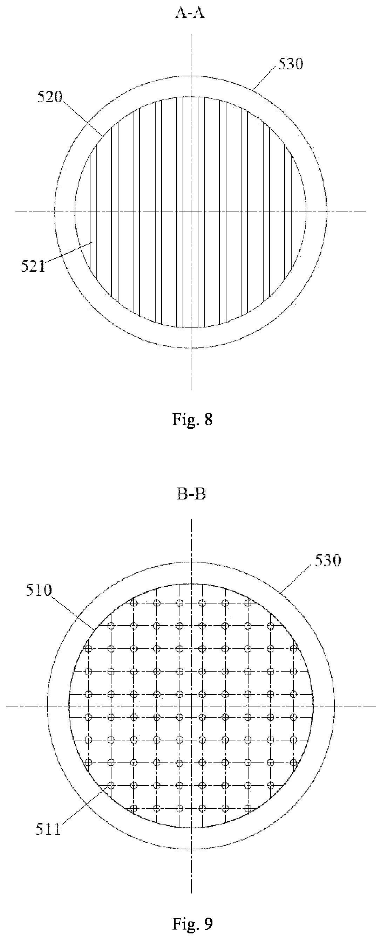

It may be particularly emphasized that the back-mixing inner part 5 is mounted on the inner wall of the cylinder 13, and it can be connected and mounted to the inner wall of the cylinder by virtue of a structure protruding from the side edges of the distribution disc 510 or by virtue of a structure protruding from the side edges of the sieve plate 520; the protruding structure may be a common inter part mounting structure, the specific form of the protruding structure is not detailed or defined in the present disclosure, and is an existing technical means possessed by those skilled in the art. As shown in Fig. 9, a plurality of axial through-holes are formed evenly on the distribution disc 510, and each axial through-hole is provided with a tubular distributor 511 (also referred to as a distribution tube) therein. As shown in Fig. 8, a plurality of bar gratings 521 are arranged on the sieve plate 520. Specifically, the bubbles pass through the distribution disc 510 located at the lowest part of the back-mixing inner part 5, and enter the back-mixing inner part 5 from the distribution tube in the distribution disc 510. The distribution disc 510 can evenly distribute and stabilize a large quantity of bubbles in the absorption fluid, and the bubbles continue to rise through the sieve plate 520 after being evenly distributed. The sieve plate 520 can stabilize the fluid in the back-mixing inner part 5 and reduce the disturbance; under the gas pushing action from bottom to top, the absorption fluid is driven to be disturbed and back-mixed from the center to the periphery, which is say, the liquid in the absorption fluid zone forms a back-mixing flow between the inner cylinder 530 and the cylinder 13, and the absorption fluid in the inner cylinder 530 will flow back through the clearance between the inner cylinder 530 and the cylinder 13 to form a back-mixing zone at the entire back-mixing inner part.

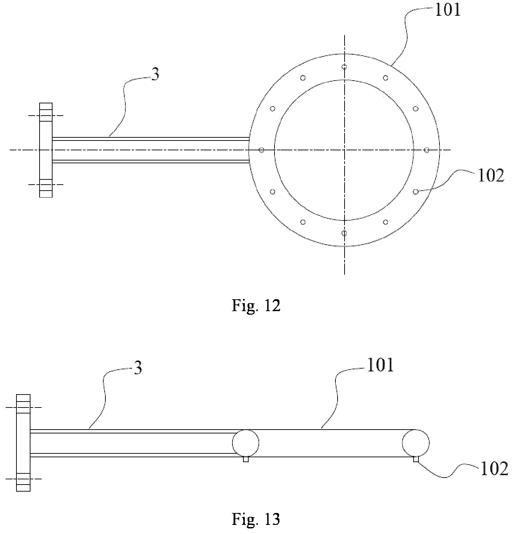

Please see the embodiment of the absorption fluid sprayer 10 shown in Figs. 12 and 13. The absorption fluid sprayer 10 comprises a spraying plate 101 and spraying orifices 102 on the spraying plate 101. Preferably, an included angle between the axial direction of the spraying orifice 102 and the horizontal direction is 40° - 50°, more preferably 45°. The spraying plate 101 has a circular cross section, and a plurality of spraying orifices 102 are provided and arranged on the lower surface of the spraying plate 101. The spraying orifices 102 form annular water spraying arrays on the spraying plate 101, which are distributed concentrically with the spraying plate 101, and a plurality of annular water spraying arrays may be provided.

Please see the embodiment of the defoaming mechanism shown in Figs. 1-5. The defoaming mechanism comprises an upper defoamer 2, a middle defoamer 4 and a lower defoamer 7, wherein the upper defoamer 2 is located above the fluid inlet pipe 3, the middle defoamer 4 is located between the inlet pipe 3 and the deflection baffle 11 (in the case that there is no deflection baffle 11, the middle defoamer 4 is located between the fluid inlet pipe 3 and the back-mixing inner part 5), and the lower defoamer 7 is located below the gas inlet pipe 6.

All of the upper defoamer 2, the middle defoamer 4 and the lower defoamer 7 are wire mesh structures arranged transversely in the cylinder.

Preferably, the upper defoamer 2 has 1-5 mm mesh aperture, 0.5-2 mm wire diameter, and 50-100 mm thickness. For example, the mesh aperture of the upper defoamer 2 may be 1 mm, 2 mm, 3 mm, 4 mm or 5 mm, etc.; the wire diameter may be 0.5 mm, 1 mm, 1.5 mm or 2 mm, etc.; and the thickness may be 50 mm, 60 mm, 70 mm, 80 mm, 90 mm or 100 mm, etc. The upper defoamer 2 is used to remove the foams from the gas phase entering the gas exhaust pipe 1 to ensure that the gas exhausted from the apparatus is clean.

Preferably, the middle defoamer 4 has 1-5 mm mesh aperture, 0.5-2 mm wire diameter, and 100-200 mm thickness. For example, the mesh aperture of the middle defoamer 4 may be 1 mm, 2 mm, 3 mm, 4 mm or 5 mm, etc.; the wire diameter may be 0.5 mm, 1 mm, 1.5 mm or 2 mm, etc.; and the thickness may be 100 mm, 110 mm, 120 mm, 130 mm, 140 mm, 150 mm, 160 mm, 170 mm, 180 mm, 190 mm or 200 mm, etc. The middle defoamer 4 can eliminate the foams entrained in the gas phase moving upwards in the apparatus and prevent the foams from affecting the spraying effect of the absorption fluid.

The lower defoamer 7 has 2-8 mm mesh aperture, 0.5-2 mm wire diameter, and 100-200 mm thickness. For example, the mesh aperture of the lower defoamer 7 may be 2 mm, 3 mm, 4 mm, 5 mm, 6 mm, 7 mm or 8 mm, etc.; the wire diameter may be 0.5 mm, 1 mm, 1.5 mm or 2 mm, etc.; and the thickness may be 100 mm, 110 mm, 120 mm, 130 mm, 140 mm, 150 mm, 160 mm, 170 mm, 180 mm, 190 mm or 200 mm, etc. The lower defoamer 7 is located inside the bottom sealing head 15 of the apparatus, and can eliminate the foams in the liquid phase leaving the bottom of the apparatus.

In addition, it may be noted that the first mixing core and the second mixing core in the present disclosure are structured fillers made of stainless steel. In the present disclosure, in order to generate microbubbles, the pore sizes of the microbubble-generating inner part 9 and the Venturi mixing inner part 12 (specifically, for example, the pore sizes of the pores in the first mixing core and the second mixing core) may be at micron level, for example, 0.5-3 µm.

The beneficial effects of the gas treatment apparatus according to the present disclosure compared with the plate-type absorption tower in the prior art are described below in examples and comparative examples.

Both Example 1 and Example 2 employed the gas treatment apparatus shown in Fig. 5 for absorption treatment of a sulfur-containing tail gas, while the comparative example employed the plate-type absorption tower in the prior art for absorption treatment of a sulfur-containing tail gas in the same composition. See the table below for the detailed comparison.

| | Example 1 | Example 2 | Comparative Example |
|---|---|---|---|
| Sulfur (H₂S) content (volume fraction) in the gas to be treated | 0.019 | 0.019 | 0.019 |
| Sulfur content (volume fraction) after treatment | 300ppm | 300ppm | 300ppm |
| Relative tower height | 1 | 0.85 | 1 |
| Relative dosage of absorption fluid | 0.75 | 1 | 1 |
| Mass transfer coefficient / kmol (m³hkPa)⁻¹ | 5.8 | 5.8 | 3.5 |

As can be seen from the above table, in the treatment of the same sulfur-containing tail gas, compared with the comparative example, the examples can significantly reduce the height of the reactor and the dosage of the absorption fluid under the premise of ensuring the treatment requirements.

Example 1 can reduce the dosage of the absorption fluid by about 25% under the condition of meeting the same treatment requirements. Example 2 can reduce the height of the reactor by about 15% under the condition of meeting the same treatment requirements. Compared with the comparative example, the mass transfer coefficients in Example 1 and Example 2 are greatly improved.

The present disclosure further provides a gas treatment method, which comprises the following steps:
S1: introducing a gas to be treated into an absorption fluid zone in the form of microbubbles for primary reaction;
S2: controlling the absorption fluid in the absorption fluid zone to form a back-mixing vortex under the action of a microbubble stream flowing upwards;
S3: spraying the absorption fluid downwards above the absorption fluid zone, so that the gas escaping from the absorption fluid zone has a secondary reaction with the absorption fluid sprayed downwards in an upward flowing process.

According to the gas treatment method, with the above technical scheme, the gas to be treated is introduced into an absorption fluid zone in the form of microbubbles, the absorption fluid in the absorption fluid zone is a continuous phase, and the gas is a dispersed phase; thus, there is large contact area between the gas and the liquid, the mass transfer efficiency is high, the gas has a primary reaction with the absorption fluid, so that the components to be absorbed in the gas reacts rapidly; by spraying the absorption fluid downwards above the absorption fluid zone, the gas escaping from the absorption fluid has a secondary reaction with the absorption fluid sprayed downwards in the upward flow process; the gas is a continuous phase, and the liquid is a dispersed phase sprayed into the gas, thus the contact area between the gas and the liquid is large and the mass transfer efficiency is high. Therefore, the gas treatment method in the present disclosure improves the space utilization while fully absorbing some components in the gas and improving the mass transfer efficiency.

In some embodiments, the method further comprises: further breaking the microbubble stream and accelerating it before the step S2.

The method can be implemented with the gas treatment apparatus according to the present disclosure, and the treatment process and advantages of the gas treatment apparatus are embodied in the method accordingly.

Of course, in other embodiments, the method may be implemented with any other suitable gas treatment apparatus.

So far, various embodiments of the present disclosure have been described in detail. Some details well existing in the art are not described, in order to avoid obscuring the concept of the present disclosure. Those skilled in the art can fully understand how to implement the technical scheme disclosed herein according to the above description.

When some particular embodiments of the present disclosure have been described in detail above in examples, those skilled in the art may understand that the above examples are provided only for the purpose of description rather than limiting the scope of the present disclosure. Those skilled in the art may understand that various modifications can be made to the above embodiments or equivalent replacements can be made to some technical features without departing from the scope and spirit of the present disclosure. Especially, the technical features mentioned in the embodiments can be combined in any way, as long as there is no structural confliction.

## Claims

1. A gas treatment apparatus, comprising a cylinder (13), a top sealing head (14) connected to a top end of the cylinder (13), and a bottom sealing head (15) connected to a bottom end of the cylinder (13), wherein:
a fluid inlet pipe (3) is arranged at a position of the cylinder (13) close to the top sealing head (14), a fluid outlet end of the fluid inlet pipe (3) extends into the cylinder (13), and the fluid outlet end is connected to an absorption fluid sprayer (10) used for spraying absorption fluid downwards;
a gas inlet pipe (6) is arranged at a position of the cylinder (13) close to the bottom sealing head (15), and a gas outlet end of the gas inlet pipe (6) extends into the cylinder (13) and is used for inputting a gas to be treated into the cylinder (13);
the gas outlet end of the gas inlet pipe (6) has a microbubble-generating inner part (9) connected thereto, and the microbubble-generating inner part (9) is used for forming microbubbles from the gas to be treated coming from the gas outlet end, and for mixing the microbubbles into the absorption fluid;
a back-mixing inner part (5) is arranged in the cylinder (13) above the microbubble-generating inner part (9), and the back-mixing inner part (5) is used for causing the absorption fluid to form a back-mixing vortex under the action of an upward flow of the microbubbles.

2. The gas treatment apparatus of claim 1, wherein the microbubble-generating inner part (9) comprises an inner part body (900) and a submerged pump (910), wherein the inner part body (900) comprises a first variable-diameter mixing cavity (920), a reduced mounting cavity (970) and a second variable-diameter mixing cavity (950), which are in communication with each other sequentially from bottom to top; an end of the first variable-diameter mixing cavity (920) away from the reduced mounting cavity (970) forms a liquid phase inlet, the first variable-diameter mixing cavity (920) has a conical cavity (960) therein, and an end of the conical cavity (960) facing the reduced mounting cavity (970) is open; the reduced mounting cavity (970) is filled with a first mixing core (940); the inner part body (900) further comprises an gas inlet branch pipe (930), one end of the gas inlet branch pipe (930) is connected to the gas outlet end of the gas inlet pipe (6), and the other end of the gas inlet branch pipe (930) is in communication with the conical cavity (960); and an outlet of the submerged pump (910) is in communication with the liquid phase inlet.

3. The gas treatment apparatus of claim 2, wherein an end of the first variable-diameter mixing cavity (920) connected with the reduced mounting cavity (970) and an end of the second variable-diameter mixing cavity (950) connected with the reduced mounting cavity (970) are small-diameter ends.

4. The gas treatment apparatus of claim 3, wherein the first variable-diameter mixing cavity (920) comprises a cylindrical section and a conical section, which are in communication with each other from bottom to top, and a maximum diameter of the conical section is equal to the diameter of the cylindrical section; the diameter of the reduced mounting cavity (970) is equal to a minimum diameter of the conical section, the second variable-diameter mixing cavity (950) is configured to gradually expand from bottom to top, and a minimum diameter of the second variable-diameter mixing cavity (950) is equal to the diameter of the reduced mounting cavity (970).

5. The gas treatment apparatus of claim 4, wherein the conical cavity (960) comprises a first conical section and a second conical section, which are in communication with each other from bottom to top, and the gas inlet branch pipe (930) is in communication with the first conical section;
preferably, the conicity of the first conical section is greater than the conicity of the second conical section.

6. The gas treatment apparatus of any of claims 1-5, wherein a Venturi mixing inner part (12) is arranged in the cylinder between the microbubble-generating inner part (9) and the back-mixing inner part (5), and the Venturi mixing inner part (12) is used for further breaking a microbubble stream from the microbubble-generating inner part (9), accelerating the microbubble stream and then outputting the microbubble stream upwards.

7. The gas treatment apparatus of claim 6, wherein the Venturi mixing inner part (12) comprises a gas collection port (121), a cavity structure and a mixing expansion port (125), which are connected sequentially from bottom to top, wherein the gas collection port (121) is configured to be reduced gradually in diameter from bottom to top; the mixing expansion port (125) is configured to be gradually expanded in diameter from bottom to top; the cavity structure has a reduced section (123) in communication with the bottom of the mixing expansion port (125) and a variable-diameter section (122) in communication with the bottom of the reduced section (123) therein, and the reduced section (123) is filled with a second mixing core (124);
preferably the Venturi mixing inner part (12) further comprises a connecting leg (126), which is connected between the top of the mixing expansion port (125) and the bottom of the back-mixing inner part (5).

8. The gas treatment apparatus of any of claims 1-7, wherein the back-mixing inner part (5) comprises an inner cylinder (530) and a distribution disc (510) mounted on an inner wall of the inner cylinder (530), wherein the inner cylinder (530) is coaxially arranged with the cylinder (13), with clearance between an outer wall of the inner cylinder (530) and the inner wall of the cylinder (13), and/or
a gas exhaust pipe (1) is arranged on an upper part of the top sealing head (14), and a drain pipe (8) is arranged on a lower part of the bottom sealing head (15).

9. The gas treatment apparatus of claim 8, wherein the inner cylinder (530) is in height of 500-1,500 mm, and the clearance between the outer wall of the inner cylinder (530) and the inner wall of the cylinder (13) is 100-200 mm; and/or
the back-mixing inner part (5) further comprises a sieve plate (520) mounted on the inner wall of the inner cylinder (530), and the sieve plate (520) is arranged above the distribution disc (510) in a spaced apart manner.

10. The gas treatment apparatus of claim 9, wherein the distribution disc (510) is provided with a plurality of axial through-holes, and a tubular distributor (511) is arranged in each axial through-hole; and/or a plurality of bar gratings (521) are arranged on the sieve plate (520).

11. The gas treatment apparatus of any of claims 1-10, wherein a deflection baffle (11) is arranged on the inner wall of the cylinder between the back-mixing inner part (5) and the fluid inlet pipe (3), and/or a defoaming mechanism is arranged on the inner wall of the cylinder (13).

12. The gas treatment apparatus of claim 11, wherein the defoaming mechanism comprises an upper defoamer (2), a middle defoamer (4) and a lower defoamer (7), wherein the upper defoamer (2) is located above the fluid inlet pipe (3), the middle defoamer (4) is located between the fluid inlet pipe (3) and the deflection baffle (11), and the lower defoamer (7) is located below the gas inlet pipe (6).

13. The gas treatment apparatus of claim 12, wherein all of the upper defoamer (2), the middle defoamer (4) and the lower defoamer (7) are wire mesh structures,
the upper defoamer (2) has 1-5 mm mesh aperture, 0.5-2 mm wire diameter, and 50-100 mm thickness;
the middle defoamer (4) has 1-5 mm mesh aperture, 0.5-2 mm wire diameter, and 100-200 mm thickness; and
the lower defoamer (7) has 2-8 mm mesh aperture, 0.5-2 mm wire diameter, and 100-200 mm thickness.

14. A gas treatment method, comprising the following steps:
S1: introducing a gas to be treated into an absorption fluid zone in the form of microbubbles for primary reaction;
S2: controlling the absorption fluid in the absorption fluid zone to form a back-mixing vortex under the action of a microbubble stream flowing upwards;
S3: spraying the absorption fluid downwards above the absorption fluid zone, so that the gas escaping from the absorption fluid zone has a secondary reaction with the absorption fluid sprayed downwards in an upward flowing process.

15. The gas treatment method of claim 14, further comprising: further breaking the microbubble stream and accelerating it before the step S2; and/or
the method is implemented with the gas treatment apparatus of any of claims 1-13.
